# EUROPEAN PATENT SPECIFICATION

(11) **EP 2 845 380 B1**
(45) Date of publication and mention of the grant of the patent: **18.11.2015**
(21) Application number: 14738811.0
(22) Date of filing: 09.07.2014
(51) Int. Cl.: H04M 3/42, H04M 7/00

(54) **METHOD AND SYSTEM FOR CALL SETUP**
VERFAHREN UND SYSTEM FÜR VERBINDUNGSAUFBAU
PROCÉDÉ ET SYSTÈME D'ÉTABLISSEMENT D'APPELS

(30) Priority: 16.07.2013 LU 92253
(43) Date of publication of application: 11.03.2015
(73) Proprietor: Pindo S.a., 5280 Sandweiler (LU)
(72) Inventor: DIDELOT, Loïc, L-7462 Moesdorf (LU)
(74) Representative: Pronovem
(86) International application number: PCT/EP2014/064703
(87) International publication number: WO 2014/202798

(56) References cited:
- EP-A2- 1 195 975
- WO-A1-2006/083208
- US-A1- 2005 276 409

## Description

### Technical Field

The present invention generally relates to a call setup procedure.

### Background Art

With the spreading of mobile telephony and Internet applications, mobile device management becomes an increasingly important issue for companies and institutions, especially for companies that provide their employees with a company- or institution-owned mobile device or those that apply a BYOD ("Bring Your Own Device") policy. Since the user normally has to bear the costs of their private communications whereas phone calls made for the employer have to be billed to the latter, measures have to be taken to allow for eased distinction between the these categories of communications. Another problem that occurs with mobile devices that are used both for private and corporate calls is that called parties will obtain a private telephone number of the caller, which may not be in the interest of the caller nor in the interest of the company or institution. An existing solution to these problem is to use mobile devices with two SIMs (Subscriber Identity Modules), one of which is private and the other company-owned, but this solution cannot in practice be used in the context of a BYOD policy.

WO 96/22000 discloses a corporate/organization communications system including a number of mobile telephones and a local network which has a private automatic branch exchange PABX. A so-called mobility server is connected to the PABX as an adjunct thereto and manages all calls to and from the mobile telephones. The mobile telephones have two identities, a private one and a corporate/organization one. With the corporate/organization identity, the mobile telephones can make outgoing calls to the PABX only. The mobility server checks the services requested in a call from a mobile telephone. If the requested services match a service profile associated with the mobile telephone, the mobility server initiates the setup of the requested outgoing call. If they do not match, the outgoing call is rejected. In this manner the company/organization controls all outgoing calls from its mobile telephones. Calls directed to the mobile telephones are managed by a call park, call alert and call back sequence.

Another possibility for tackling the above problems would be to set up a callback service. EP 0 989 719 discloses a method and mobile telephone apparatus allowing for a convenient way to initiate a callback session. The mobile telephone has a data messaging device included therein for communicating with a data network and uses a Remote Telephone Call Origination (RTCO) to avoid relatively high charges in one locale and to incur lower charges in a second, lower-cost locale. Calls are placed by (a) capturing a telephone number dialed by a user of the mobile telephone, (b) transmitting a data message to the data network using the data message device, the data message including the dialed telephone number and identifying the mobile telephone number, (c) relaying the message from the data network to the RTCO platform, (d) placing a first call from the callback platform to the mobile telephone, and (e) placing a second call from the callback platform to the long distance telephone number dialed in a manner to connect the first and second calls to each other.

### Technical Problem

It is an object of the present invention to address the above problems in an efficient way.

### General Description of the Invention

In accordance with the present invention, a phone call is initialized at a mobile device by an application ("app"), which causes the mobile phone to build a data packet containing at least a caller identifier (caller ID) and the phone number to be called selected by the user. The application transmits the data packet via a packet-oriented mobile data service (e.g. GPRS, EDGE, HSPA, etc.) to a control server, which enters the information contained in the data packet into a database (hereinafter termed "link database"). Simultaneously (or almost simultaneously) to the sending of the data packet, the application initializes a phone call to a gateway server using the gateway server's phone number. The gateway server sees the caller ID of the incoming phone call and uses it to look up the corresponding phone number to be called in the link database, which it has access to. The gateway server then forwards the incoming phone call to the phone number to be called.

As will be appreciated, the gateway server could be configured to forward the phone call with its own caller ID. Alternatively the gateway server may be connected to a PBX (private branch exchange) configured to forward the call under a specific caller ID. The invention thus allows a user to keep his mobile device number private. The invention is especially suited for companies or institutions, since the employees may place phone calls from their mobile devices while hiding their caller IDs. If the gateway server is configured accordingly, the called party sees the company or institution's phone number instead of the number of the mobile device from which the call originates. Another advantage of the invention is that business calls may be billed directly to the company or institution. Specifically, a company or institution offering this service to their employees may bear the costs of the transmission of the data package, the costs of the phone call from the mobile device to the gateway server and the costs of the phone call from the gateway server or PBX to the called party. By routing the mobile-device-initialized phone calls over the gateway server the costs for the company or institution can be reduced because it typically benefits from a flatrate or at least lower connection costs.

It is worthwhile noting that the application on the mobile device could be configured to take in charge all outgoing phone calls. More preferably, however, the application is configured such that the user may decide whether the phone call is to be placed in the conventional manner or via the gateway server. Typically, a user would then use the application of this invention for business calls, whereas his private calls would be conventionally served by the mobile telephone network.

The present invention comprises plural parts that interact with one another. A first part of the invention is the mobile device application that controls the steps to be carried out by the mobile phone. A second part of the invention is the gateway server, which is configured to handle the incoming phone calls. A third part of the invention relates to the control server, which receives the data packets and enters the information contained therein into the link database. Specifically, the mobile device, the gateway server and the control server may have implemented therein respective softwares (or applications), which are matched to one another and cause the mobile device, the gateway server and the control server to interact with one another in the described manner. Furthermore, the mobile device, the gateway server and the control server may comprise hardware components (e.g. communication interfaces), which allow them to establish the respective data and/or telephone connections.

The mobile device application comprises instructions, which when executed by a processor of a mobile device, cause the mobile device
∘ to obtain a phone number to be called;
∘ to build a data packet (e.g. a UDP packet or a TCP packet) containing at least the mobile device's caller identifier and the phone number to be called;
∘ to transmit the data packet to the control server, which then enters the caller identifier and the phone number into the link database;
∘ to initialize a phone call to the gateway server, which is configured to look up the phone number to be called in the link database using the caller identifier (transmitted with the incoming phone call) and to forward the phone call to the phone number to be called.

Preferably, the data packet comprises at least one security element. Such a security element is preferably based upon a security key. It could e.g. be a digital signature, a cryptographic hash code or message authentication code. Preferably, the data packet also comprises a username.

The data packet may also be encrypted in order to prevent a malevolent person from obtaining knowledge of the number called from the mobile device.

Preferably, the mobile device comprises a non-volatile memory wherein the mobile device application is stored. Furthermore, the mobile device may be configured to display a button or icon to launch the mobile device application. Preferably, the mobile device application is configured such that it prompts the user to enter a phone number when it is executed at a moment when the user has not selected any phone number. Additionally or alternatively, the mobile device application may be configured such that its launch button or icon is displayed each time the user selects a phone number to be called or each time the user enters (by whatever means, e.g. by voice dialing) a name associated with a phone number in the mobile device's contact database.

The gateway server is configured
∘ to receive a phone call from a mobile device initiated by the mobile device application;
∘ to accede the link database;
∘ to look up the phone number to be called in the link database using the caller identifier (transmitted with the incoming phone call); and
∘ to forward the received phone call by initializing a phone call to the phone number to be called and switching together the phone call received from the mobile phone and the phone call to the phone number to be called.

Other steps carried out by the gateway server depend on the configuration and the contents of the data packet transmitted to the link database. If the data packet contains a security element, the gateway server is preferably configured to retrieve at least the caller identifier, the phone number and a security element and to verify the authenticity of the data packet. The gateway server forwards the phone call if the verification has been successful and dumps or terminates it otherwise. The gateway server preferably verifies the authenticity of the data packet by looking up, in an authentication database, a security key using the caller ID (from the telephone call or the link database) or a username initially contained in the data packet and retrieved from the link database, generating a copy of the security element based upon the information available at the gateway server and comparing the copy with the security element retrieved from the database. If the security element matches its copy, the verification is considered successful.

Turning to the third part of the invention, the control server is configured to receive, from a mobile device on which the mobile device application is executed, the data packet containing at least the caller identifier and the phone number to be called, and to enter the caller identifier and the phone number to be called into the link database, which the gateway server has access to, e.g. via a communication network that connects the control server to the gateway server.

As will be appreciated, the invention is especially well suited for companies applying a BYOD policy, since the invention requires only a very simple application to be installed on the mobile devices. Furthermore, no complex hardware will be required in order to implement the gateway server, the control server, the link database and, if applicable, the authentication database. For many companies or institutions, the gateway server, the control server, the link database and, if applicable, the authentication database can be implemented on existing hardware, by installation of a software package adding the described functionalities.

### Brief Description of the Drawings

A preferred, non-limiting embodiment of the invention will now be described, by way of example, with reference to the accompanying drawings in which:
Fig. 1: is a block schematic diagram of a communication system for implementing a preferred embodiment of the invention;
Fig. 2: is a block schematic diagram illustrating the data packet generation by the mobile device application;
Fig. 3: is a block schematic diagram of the transmission of the data packet to the control server and the initialization of a voice phone call with the gateway server;
Fig. 4: is a block schematic diagram illustrating the updating of the link database;
Fig. 5: is a block diagram of the hashcode verification algorithm;
Fig. 6: is a block diagram illustrating the final phase of the call setup, i.e. the establishment of a communication channel between a mobile device and the number to be called via the gateway server.

### Description of Preferred Embodiments

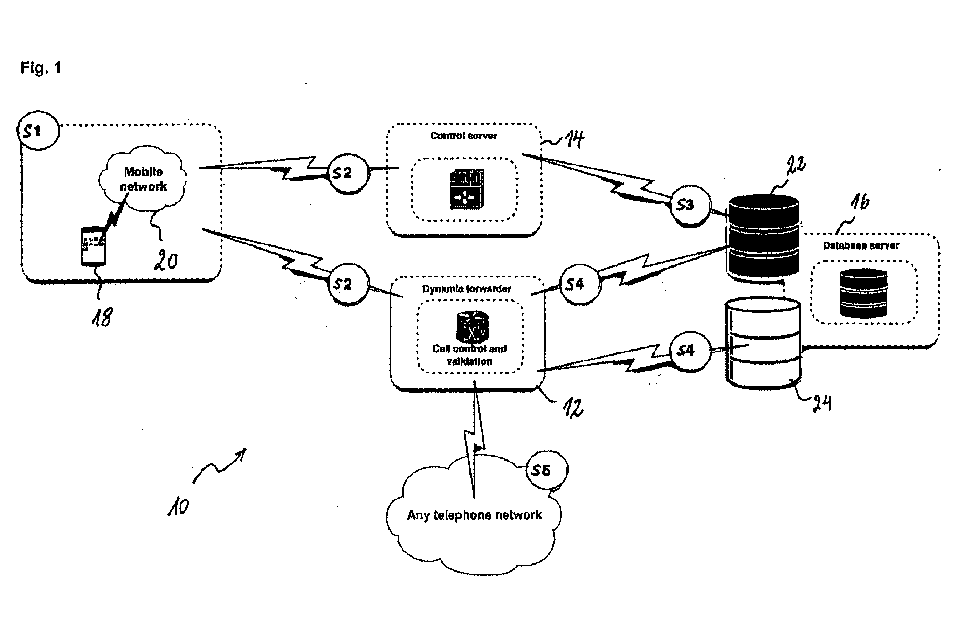

Fig. 1 illustrates a communication system 10 implementing the invention in accordance with a preferred embodiment. The system 10 comprises, on the service provider side, a gateway server 12 (labeled "dynamic forwarder" in the figures), a control server 14 and a database server 16. These system components are connected to one another via a communication network, e.g. a local area network. Preferably, the gateway server 12, the control server 14 and the database server 16 are hosted in a datacenter facility. The database server 16 manages a link database 22 and an authentication database 24.

On the service subscriber or user side, the system 10 comprises a mobile device 18, such as a mobile phone, a smart phone, or any other mobile device capable of connecting to a mobile telephony network and placing voice calls. The mobile devices may connect themselves to the service provider (which may e.g. be a company or an organization) via a mobile network 20 provided by a mobile phone operator (which may be a third party or the service provider).

The mobile device 18 may place conventional voice calls via the mobile network 20 without interacting with the service provider. To benefit from the service offered by the service provider, each subscriber has to register himself and to install on his mobile device an application ("app"), which allows him to place a phone call via the service provider in accordance with the preferred embodiment. The service provider registers the subscribers in the authentication database 24 with a username and an associated password and, optionally, other data such as caller ID of the mobile phone, with which the subscriber is going to use the service.

A phone call in accordance with the preferred embodiment, from the mobile device to a called party, which may be any telephony terminal reachable via the public switched telephone network (PSTN), is set up in the following way.

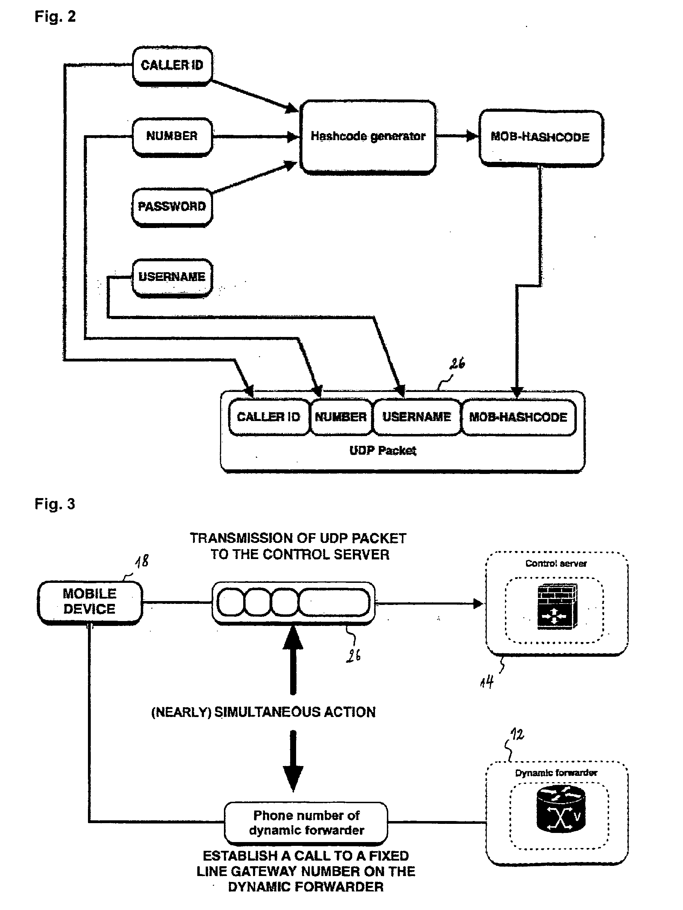

The major steps of the call setup process are indicated in Fig. 1 by reference numbers S1 to S5. These steps are hereinafter described in detail with reference to Figs. 2 to 6.

In step S1, after having selected the phone number to be called, the user of the mobile device 18 launches the application, which, as illustrated in Fig. 2, retrieves the phone number to be called, the user's password (preferably stored in memory during the installation of the application) and the caller ID and generates a cryptographic hashcode (MOB-HASHCODE). The application then builds a structured UDP (User Datagram Protocol) packet 26 with the following records: 1) the caller ID, 2) the phone number to be called, 3) the username (also preferably stored in memory during installation of the application) and 4) the generated hashcode. The password value is not sent in clear. In this embodiment of the invention, the UDP packet has a very light structure with a maximum of 512 bytes of data. The small size of the data packet is beneficial in the next step, i.e., the transmission of the packet to the control server.

In step S2, the UDP packet is transmitted to the control server 14 via a mobile data network (e.g. GPRS, EDGE, ...). The packet bears all relevant data to set up the requested call between the mobile device and the destination number. As the information UDP packet is very small, the user need not rely on a high volume mobile data subscription and/or high bandwidth availability, such as HSPDA, 3G, 4G, etc. The control server 14 is addressable via a fixed public IP address. The application on the mobile device may be configured to send each UDP packet several times (e.g. three times) in order to reduce the probability of the UDP packet not reaching the control server.

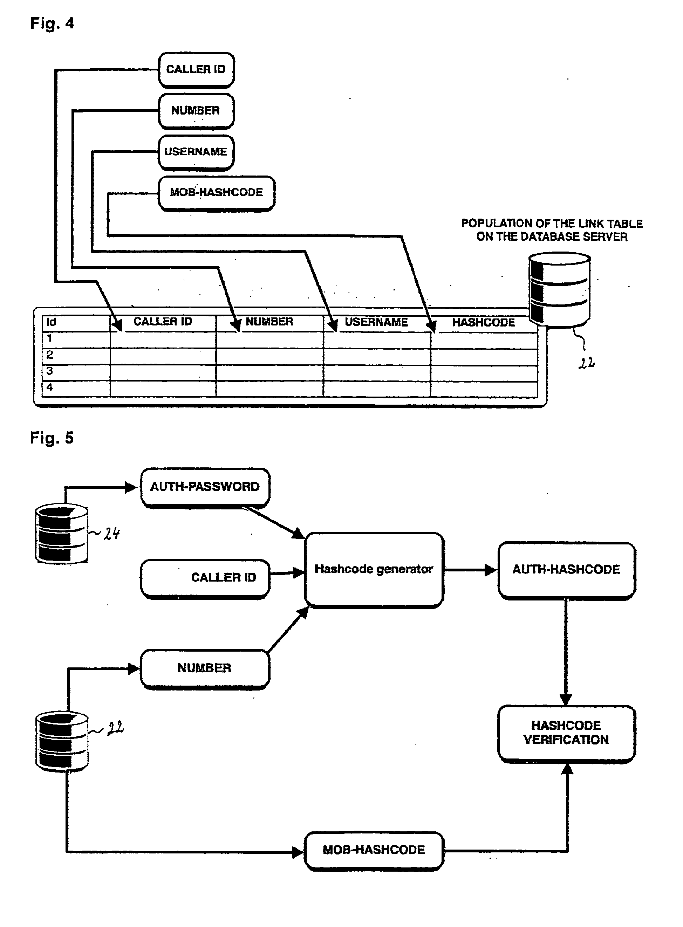

The control server 14 accepts the UDP packet 26 sent by the mobile device and enters the data contained therein into the link database 22 hosted by the database server 16 (call registration step S3, illustrated in Fig. 4). The link database 22 contains the information transmitted in the UDP packets sent from the mobile devices 18. Preferably, the control server 14 also acknowledges receipt of the UDP packet to the mobile device application. The structure of the link database may be as in the following example:

| Primary key | Username | Caller ID | Called Number | MOB-HASHCODE |
|---|---|---|---|---|
| 100 | User1 | +352691323... | 12344566 | checkSUMhash |
| 101 | User2 | +3526211464... | 11223344 | otherCheckSUM |
| ··· | ··· | ··· | ··· | ··· |

Simultaneously, or at least nearly simultaneously to the transmission of the UDP packet, the application causes the mobile phone 18 to initialize a voice phone call to the gateway server 12. The gateway server 12 accepts the connection and keeps it open while the gateway server 12 determines how the incoming call has to be handled.

For each call on its gateway line, the gateway server 12 queries the link database 22 to receive the latest call registered therein corresponding to the caller ID. The gateway server 12 then retrieves the username, the phone number to be called and the hashcode transmitted with the UDP packet 26. Before forwarding the waiting call to the number to be called, the gateway server 12 validates the call. Preferably, each registered call is associated in the link database with a time stamp indicating the reception time of the UDP packet. If the latest registered call in the link database is older than a predefined timeout duration, the gateway server discards it in order to avoid that an old phone call is set up again. To introduce some resiliency in regard of delayed delivery of the UDP packet, the gateway server 12 is preferably configured to retry (e.g. one, two or three times) the retrieval of the UDP packet information if the first attempt fails.

For the validation, the gateway server retrieves the password from the authentication database 24 using the username collected from the link database (or the caller ID if the caller ID is linked to the password in the authentication database.) The structure of the authentication database may be as in the following table:

| Primary key | Username | Password |
|---|---|---|
| 1 | user1 | ThisISapassword |
| 2 | user2 | anotherpassword |
| ··· | ··· | ··· |

Using the password from the authentication database 24, the caller ID and the phone number to be called, the gateway server 12 generates a hashcode using the same cryptographic hash function as the application running on the mobile phones (Fig. 5). The hashcode from the link database (MOB-HASHCODE) and the hashcode generated locally (AUTH-HASHCODE) are then compared. If they match, the UDP packet received at the control server 14 is considered authentic and the gateway server forwards the phone call to the phone number to be called (destination number). If the hashcodes do not match, the validation of the phone call fails and the gateway server 12 terminates the connection with the mobile device 18.

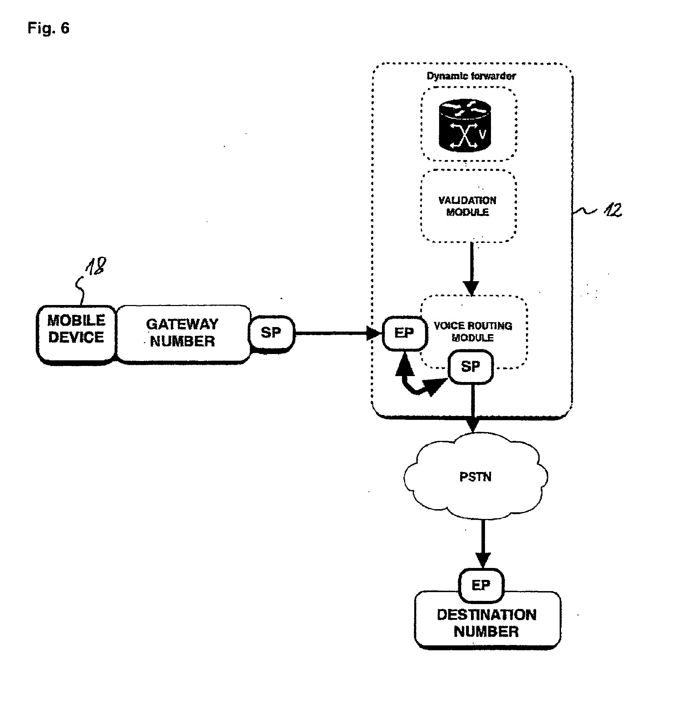

In the case of a successful call validation, call establishment is the final phase of the process (step S5, Fig. 6). In this phase, the gateway server 12 sets up a communication channel, under its own caller ID, to the phone number to be called. By means of an internal voice routing module, the gateway server 12 finally connects the new communication channel with the already open communication channel between the mobile device 18 and the gateway server 12. If one of the communication channels is closed (by the caller or the called party), the gateway server terminates the other communication. After a phone call has been terminated, the gateway server 12 may enter that information into the link database 22. When a new call is received from the same caller ID, the gateway server 12 will discard entries relating to terminated calls.

In the illustrated embodiment, the validation of the call contained only the verification of the hashcode. It should be noted, however, that the gateway server 12 could be configured to check other conditions, e.g. whether the calling mobile device is authorized to place a call to the specific destination number. Such additional checks could, e.g., be made in case of different categories of user rights.

While a specific embodiment has been described in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

### Legend

- 10: Communication system
- 12: Gateway server
- 14: Control server
- 16: Database server
- 18: Mobile device
- 20: Mobile network
- 22: Link database
- 24: Authentication database
- 26: UDP packet

- S1: UDP packet generation
- S2: UDP packet transmission and initialization of phone call to gateway server
- S3: Updating link database with contents of UDP packet
- S4: Collection of contents of UDP packet and collection of authentication data by gateway server
- S5: Establishment of phone call from gateway server to destination number

## Claims

1. Mobile device application comprising instructions, which, when executed by a processor of a mobile device (18), cause the mobile device (18) to carry out the following:
obtaining a phone number to be called;
building a data packet (26) containing at least a caller identifier and said phone number to be called;
transmitting said data packet (26) to a control server (14) configured to enter said caller identifier and said phone number to be called into a link database (22);
initializing a phone call to a gateway server (12) having access to said link database (22) and configured to look up said phone number to be called in said link database (22) using said caller identifier and to forward said phone call to said phone number to be called.

2. Mobile device application as claimed in claim 1, wherein said data packet (26) is a UDP packet.

3. Mobile device application as claimed in claim 1 or 2, wherein said data packet (26) further comprises a security element selected from a digital signature, a cryptographic hash code and a message authentication code, said security element being based upon a security key.

4. Mobile device application as claimed in any one of claims 1 to 3, wherein said data packet (26) comprises a username.

5. Mobile device application as claimed in any one of claims 1 to 4, wherein said data packet (26) is encrypted.

6. Mobile device (18) comprising a non-volatile memory wherein said mobile device application as claimed in any one of claims 1 to 5 is stored, said mobile device (18) being configured to display a button or icon to launch said mobile device application.

7. Gateway server (12) configured to
receive a phone call from a mobile device (18) initiated by a mobile device application as claimed in any one of claims 1 to 5;
accede a link database (22), into which a control server (14) has entered at least a caller identifier and a phone number to be called upon receipt, from said mobile device (18), of a data packet (26) containing at least said caller identifier and said phone number to be called;
look up said phone number to be called in said link database (22) using said caller identifier; and to
forward said received phone call by initializing a phone call to said phone number to be called and switching together said phone call received from said mobile phone and said phone call to said phone number to be called.

8. Gateway server (12) as claimed in claim 7, configured
to retrieve from said link database (22) at least said caller identifier, said phone number and a security element contained in said data packet;
to verify the authenticity of said data packet (26); and
to forward said phone call only if the authenticity is successfully verified.

9. Gateway server (12) as claimed in claim 8, configured to verify authenticity of said data packet (26) by
looking up, in an authentication database (24), a security key using said caller identifier or a username contained in said data packet (26) and retrieved from said link database,
generating a copy of said security element; and
comparing said copy with the security element retrieved from said database.

10. Control server (14) and gateway server (12) in combination, the gateway server (12) being as claimed in any one of claims 7 to 9, the control server (14) being configured to
receive, from a mobile device (18) on which an application as claimed in any one of claims 1 to 5 is executed, a data packet (26) containing at least a caller identifier and a phone number to be called; and to
enter said caller identifier and said phone number to be called into said link database (22),
said control server being connected with said gateway server (12) in such a way as to give said gateway server (12) access to said link database (22).

## Patentansprüche

1. Mobilvorrichtungsanwendung, die Anweisungen umfasst, die, wenn sie durch einen Prozessor einer mobilen Vorrichtung (18) ausgeführt werden, bewirken, dass die mobile Vorrichtung (18) Folgendes ausführt:
Erhalten einer anzurufenden Telefonnummer;
Aufbauen eines Datenpakets (26), das mindestens eine Anruferkennung und die anzurufende Telefonnummer enthält;
Senden des Datenpakets (26) zu einem Steuerserver (14), der dafür ausgelegt ist, die Anruferkennung und die anzurufende Telefonnummer in eine Verbindungsdatenbank (22) einzutragen;
Initialisieren eines Telefonanrufs eines Gateway-Servers (12), der über Zugang zu der Verbindungsdatenbank (22) verfügt und dafür ausgelegt ist, unter Verwendung der Anruferkennung die anzurufende Telefonnummer in der Verbindungsdatenbank (22) nachzuschlagen und den Telefonanruf an die anzurufende Telefonnummer weiterzuleiten.

2. Mobilvorrichtungsanwendung nach Anspruch 1, wobei das Datenpaket (26) ein UDP-Paket ist.

3. Mobilvorrichtungsanwendung nach Anspruch 1 oder 2, wobei das Datenpaket (26) ferner ein Sicherheitselement umfasst, ausgewählt aus einer digitalen Signatur, einem kryptografischen Hash-Code und einem Nachrichtenauthentifizierungscode, wobei das Sicherheitselement auf einem Sicherheitsschlüssel basiert.

4. Mobilvorrichtungsanwendung nach einem der Ansprüche 1 bis 3, wobei das Datenpaket (26) einen Benutzernamen umfasst.

5. Mobilvorrichtungsanwendung nach einem der Ansprüche 1 bis 4, wobei das Datenpaket (26) verschlüsselt ist.

6. Mobile Vorrichtung (18), die einen nichtflüchtigen Speicher umfasst, in dem die Mobilvorrichtungsanwendung nach einem der Ansprüche 1 bis 5 gespeichert ist, wobei die mobile Vorrichtung (18) dafür ausgelegt ist, eine Schaltfläche oder ein Icon zum Starten der Mobilvorrichtungsanwendung anzuzeigen.

7. Gateway-Server (12), ausgelegt zum Empfangen eines Telefonanrufs von einer mobilen Vorrichtung (18), der durch eine Mobilvorrichtungsanwendung nach einem der Ansprüche 1 bis 5 eingeleitet wird;
Zugreifen auf eine Verbindungsdatenbank (22), in die ein Steuerserver (14) mindestens eine Anruferkennung und eine anzurufende Telefonnummer eingetragen hat, bei Empfang eines Datenpakets (26) von der mobilen Vorrichtung (18), das mindestens die Anruferkennung und die anzurufende Telefonnummer enthält;
Nachschlagen der anzurufenden Telefonnummer in der Verbindungsdatenbank (22) unter Verwendung der Anruferkennung; und
Weiterleiten des empfangenen Telefonanrufs durch Initialisieren eines Telefonanrufs der anzurufenden Telefonnummer und Zusammenschalten des von dem Mobiltelefon empfangenen Telefonanrufs und des Telefonanrufs der anzurufenden Telefonnummer.

8. Gateway-Server (12) nach Anspruch 7, ausgelegt zum Abrufen mindestens der Anruferkennung, der Telefonnummer und eines in dem Datenpaket enthaltenen Sicherheitselements aus der Verbindungsdatenbank (22);
Verifizieren der Authentizität des Datenpakets (26); und
Weiterleiten des Telefonanrufs nur dann, wenn die Authentizität erfolgreich verifiziert wird.

9. Gateway-Server (12) nach Anspruch 8, ausgelegt zum Verifizieren von Authentizität des Datenpakets (26) durch
Nachschlagen eines Sicherheitsschlüssels in einer Authentifizierungsdatenbank (24) unter Verwendung der Anruferkennung oder eines in dem Datenpaket (26) enthaltenen und aus der Verbindungsdatenbank abgerufenen Benutzernamens,
Erzeugen einer Kopie des Sicherheitselements; und Vergleichen der Kopie mit dem aus der Datenbank abgerufenen Sicherheitselement.

10. Steuerserver (14) und Gateway-Server (12) in Kombination, wobei der Gateway-Server (12) nach einem der Ansprüche 7 bis 9 ist und der Steuerserver (14) ausgelegt ist zum Empfangen eines Datenpakets (26), das mindestens eine Anruferkennung und eine anzurufende Telefonnummer enthält, von einer mobilen Vorrichtung (18), auf der eine Anwendung nach einem der Ansprüche 1-5 ausgeführt wird; und Eintragen der Anruferkennung und der anzurufenden Telefonnummer in die Verbindungsdatenbank (22), wobei der Steuerserver mit dem Gateway-Server (12) dergestalt verbunden ist, dass der Gateway-Server (12) Zugang zu der Verbindungsdatenbank (22) erhält.

## Revendications

1. Application de dispositif mobile comprenant des instructions qui, lorsqu'elles sont exécutées par un processeur d'un dispositif mobile (18), amènent le dispositif mobile (18) à exécuter les étapes suivantes consistant à :
obtenir un numéro de téléphone à appeler ;
construire un paquet de données (26) contenant au moins un identifiant d'appelant et ledit numéro de téléphone à appeler ;
transmettre ledit paquet de données (26) à un serveur de commande (14) configuré pour entrer ledit identifiant d'appelant et ledit numéro de téléphone à appeler dans une base de données de liaisons (22) ;
initialiser un appel téléphonique avec un serveur passerelle (12) ayant accès à ladite base de données de liaisons (22) et configuré pour consulter ledit numéro de téléphone à appeler dans ladite base de données de liaisons (22) en utilisant ledit identifiant d'appelant et renvoyer l'appel téléphonique audit numéro de téléphone à appeler.

2. Application de dispositif mobile selon la revendication 1, dans laquelle ledit paquet de données (26) est un paquet UDP.

3. Application de dispositif mobile selon la revendication 1 ou 2, dans laquelle ledit paquet de données (26) comprend en outre un élément de sécurité sélectionné parmi une signature numérique, un code de hachage cryptographique et un code d'authentification de message, ledit élément de sécurité étant basé sur une clé de sécurité.

4. Application de dispositif mobile selon l'une quelconque des revendications 1 à 3, dans laquelle ledit paquet de données (26) comprend un nom d'utilisateur.

5. Application de dispositif mobile selon l'une quelconque des revendications 1 à 4, dans laquelle ledit paquet de données (26) est crypté.

6. Dispositif mobile (18) comprenant une mémoire rémanente dans laquelle ladite application de dispositif mobile selon l'une quelconque des revendications 1 à 5 est mémorisée, ledit dispositif mobile (18) étant configuré pour afficher un bouton ou un icône pour lancer ladite application de dispositif mobile.

7. Serveur passerelle (12) configuré pour recevoir un appel téléphonique depuis un dispositif mobile (18) lancé par une application de dispositif mobile selon l'une quelconque des revendications 1 à 5 ;
accéder à une base de données de liaisons (22) dans laquelle un serveur de commande (14) a entré au moins un identifiant d'appelant et un numéro de téléphone à appeler à la réception, provenant dudit dispositif mobile (18), d'un paquet de données (26) contenant au moins ledit identifiant d'appelant et ledit numéro de téléphone à appeler ;
consulter ledit numéro de téléphone à appeler dans ladite base de données de liaisons (22) en utilisant ledit identifiant d'appelant ; et
renvoyer ledit appel téléphonique reçu en initialisant un appel téléphonique avec ledit numéro de téléphone à appeler et commutant ensemble ledit appel téléphonique reçu depuis ledit téléphone mobile et ledit appel téléphonique adressé audit numéro de téléphone à appeler.

8. Serveur passerelle (12) selon la revendication 7, configuré pour
recouvrer depuis ladite base de données de liaisons (22) au moins ledit identifiant d'appelant, ledit numéro de téléphone et un élément de sécurité contenu dans ledit paquet de données ;
vérifier l'authenticité dudit paquet de données (26) ; et
renvoyer ledit appel téléphonique uniquement si l'authenticité est correctement vérifiée.

9. Serveur passerelle (12) selon la revendication 8, configuré pour vérifier l'authenticité dudit paquet de données (26) en
consultant, dans une base de données d'authentification (24), une clé de sécurité en utilisant ledit identifiant d'appelant ou un nom d'utilisateur contenu dans ledit paquet de données (26) et recouvré depuis ladite base de données de liaisons,
générant une copie dudit élément de sécurité ; et comparant ladite copie à l'élément de sécurité recouvré de ladite base de données.

10. Serveur de commande (14) et serveur passerelle (12), combinés, le serveur passerelle (12) étant selon l'une quelconque des revendications 7 à 9, le serveur de commande (14) étant configuré pour recevoir, depuis un dispositif mobile (18) sur lequel une application selon l'une quelconque des revendications 1 à 5 est exécutée, un paquet de données (26) contenant au moins un identifiant d'appelant et un numéro de téléphone à appeler ; et pour
entrer ledit identifiant d'appelant et ledit numéro de téléphone à appeler dans ladite base de données de liaisons (22),
ledit serveur de commande étant connecté audit serveur passerelle (12) de façon à permettre audit serveur passerelle (12) d'accéder à ladite base de données de liaisons (22).
